# EUROPÄISCHE PATENTSCHRIFT

(11) **EP 2 592 635 B1**
(45) Veröffentlichungstag und Bekanntmachung des Hinweises auf die Patenterteilung: **21.05.2014**
(21) Anmeldenummer: 11008877.0
(22) Anmeldetag: 08.11.2011
(51) Int. Cl.: H01F 27/06, H01F 27/26

(54) **Unterflur-Transformator**
Underfloor transformer
Transformateur souterrain

(43) Veröffentlichungstag der Anmeldung: 15.05.2013
(73) Patentinhaber: ABB Technology AG, 8050 Zürich (CH)
(72) Erfinder: Bockholt, Marcos, 33104 Paderborn (DE); Luckey, Michael, 34431 Marsberg (DE); Mönig, Wolfgang, 59929 Brilon (DE); Weber, Benjamin, 59955 Winterberg (DE)
(74) Vertreter: Kock, Ina

(56) Entgegenhaltungen:
- EP-A1- 2 040 273
- EP-A1- 2 157 005
- JP-A- 5 013 243
- JP-A- 9 134 823
- JP-A- 2002 170 724
- JP-A- 2003 163 122
- JP-A- 2008 117 898

## Beschreibung

Die Erfindung betrifft einen Unterflur-Transformator, umfassend einen geschichteten Transformatorkern und wenigstens eine von diesem längs einer Schenkelachse durchgriffene elektrische Wicklung.

Es ist allgemein bekannt, dass für die Übertragung von elektrischer Energie entsprechende leitungsgebundene Versorgungsnetze zur Verfügung stehen. Je nach zu übertragender elektrischer Leistung weisen diese eine Nennspannung von beispielsweise 380kV, 110kV oder auch 10kV auf, wobei typischerweise eine Netzfrequenz von 50 beziehungsweise 60Hz zum Einsatz kommt. Ein Versorgungsnetz für die Versorgung stationärer Verbraucher ist typischerweise 3-phasig aufgebaut, es steht also ein System mit drei Versorgungsleitungen zur Verfügen, bei denen im symmetrischen Zustand Strom und Spannung bei einer Phasenverschiebung von jeweils 120° zueinander betragsmäßig gleich sind.

Energieversorgungssysteme für mobile Verbraucher, wie beispielsweise Eisenbahnen oder Straßenbahnen sind typischerweise einphasig aufgebaut, d.h. die Versorgung erfolgt über eine einzelne Versorgungsleitung wobei die Rückleitung dann über die metallische Schiene erfolgt. Bei Oberleitungsbussen sind aufgrund der nicht vorhandenen und als Rückleiter benutzbaren Schiene in der Regel zwei Versorgungsleitungen vorgesehen. Üblicherweise beträgt die Netzfrequenz bei derartigen Anwendungen zumindest in Europa 16 2/3, 25, 50 oder 60 Hertz, in einigen Fällen wie bei S-Bahnen kommt auch vereinzelt Gleichspannung zur Anwendung.

Zur Transformation der typischen Wechselversorgungsspannung von 10kV bis 15kV sind mobile Transformatoren vorgesehen, welche dann beispielsweise in den Unterflurbereich eines Personenzuges integriert werden.

Diese haben aufgrund der Unterfluranordnung nur einen insbesondere bezüglich der Höhe sehr begrenzten Raum zur Verfügung und sind zumeist als Öltransformatoren ausgeführt. Das Öl dient hierbei einerseits als Kühlmittel zur Abführung der im Betrieb entstehenden Verlustwärme als auch als Isolationsmittel, durch welches geringere Isolationsabstände und damit eine kompakte Bauform realisiert werden können.

Nachteilig hierbei ist jedoch, dass ein derartiger Transformator aus mechanischen Gründen zumeist nur stehend, also mit senkrecht ausgerichteter Schenkelachse, angeordnet werden kann, was aber dem flachen Platzangebot im Unterflurbereich entgegensteht. Zudem ist aus Sicherheitsgründen Öl als brennbares Medium in einem Verkehrsmittel wenn möglich zu vermeiden. Eine liegende Anordnung nutzt das zur Verfügung stehende Platzangebot deutlich besser, es treten jedoch mechanische Probleme mit der Druckbelastung der dann liegenden Wicklung auf, über welche das Kerngewicht abgetragen wird. Es sind auch Ausführungsvarianten mit Trockentransformatoren bekannt, welche aufgrund der Druckbelastungsproblematik der Wicklungen allerdings ebenfalls stehend angeordnet sind, wobei hier aufgrund des nicht vorhandenen Öls noch für eine verstärkte Kühlung zu sorgen ist.

Ausgehend von diesem Stand der Technik ist es Aufgabe der Erfindung, einen liegend anzuordnenden Trockentransformator für mobile Anwendungen anzugeben.

Diese Aufgabe wird gelöst durch einen Trockentransformator der eingangs genannten Art. Dieser ist dadurch gekennzeichnet, dass an den beiden axialen Endbereichen des Transformatorkerns jeweils eine mechanisch mit diesem zusammenwirkende Haltevorrichtung vorgesehen ist, welche für eine derartige Zugkraftbeanspruchung so ausgelegt ist, dass der Unterflur-Transformator bei annähernd waagerecht ausgerichteter Schenkelachse hängend von diesen Haltevorrichtungen getragen werden kann.

Die Grundidee der Erfindung besteht darin, den Unterflur-Transformator für eine hängende Anordnung vorzusehen, wobei die Haltevorrichtungen direkt an den beiden axialen Enden des Transformatorkerns angreifen und eine Abtragung des Kerngewichtes über die wenigstens eine von diesem längs der Schenkelachse durchgriffene elektrische Wicklung vermieden ist. Bei einer liegenden Anordnung ist sonst nämlich die hohlzylindrische Wicklung für eine Druckbeanspruchung in radialer Richtung, d.h. bei Anordnung der Wicklung in liegender Einbauposition in senkrechter Richtung nach unten, vorzusehen. Insbesondere die bei stehenden Trockentransformatoren längs der Schenkelachse vorgesehenen Kühlkanäle sind einer Gewichtsbelastung von beispielsweise bis zu einigen Tonnen nicht gewachsen, weil bei einer typischen stehenden Anordnung lediglich das Eigengewicht der Wicklung über diese abzutragen ist, wobei dann die Kühlkanäle senkrecht ausgerichtet sind und letztendlich keiner Gewichtsbelastung unterliegen.

Entsprechend einer bevorzugten Ausführungsform des erfindungsgemäßen Unterflur-Transformators sind benachbarte Schichten des geschichteten Transformatorkerns längs wenigstens einer Schenkelachse miteinander verklebt. Bei entsprechend länglicher Ausführung des Kernes des erfindungsgemäßen Unterflur-Transformators kann es bei Aufhängung an den beiden axialen Kernenden nämlich zu einer Durchbiegung der Kernschenkel kommen, welche sowohl durch das Eigengewicht des Transformatorkerns als auch durch das Gewicht der Wicklung bedingt ist. Durch die geschichtete Ausführung des Transformatorkerns ist dessen Belastbarkeit quer zur Schenkelachse bei liegender Anordnung nämlich im Vergleich zu einem massiven Kern reduziert, wobei andererseits eine Blechung des Kernes zur Vermeidung von Wirbelstromverlusten unvermeidlich ist. Eine Verklebung von benachbarten Blechlagen, insbesondere im Bereich der Transformatorschenkel, erhöht die mechanische Stabilität des Schenkels. Im Falle der Verklebung aller Blechlagen miteinander entspricht die Belastbarkeit des Transformatorschenkels dann in etwa der von einer massiven, ungeblechten Ausführung. Somit sind in vorteilhafter Weise auch längliche Ausführungsformen des erfindungsgemäßen Unterflur-Transformators, beispielsweise mit einer Kernlänge, welcher einer 3 bis 6 fachen Kernbreite entspricht, ohne Durchbiegungsproblematik realisierbar.

Eine weitere erfindungsgemäße Möglichkeit zur Stabilisierung des Transformatorkerns, insbesondere von dessen Schenkeln, besteht darin, dass der geschichtete Transformatorkern längs wenigstens einer Schenkelachse wenigstens eine Stabilisierungsplatte aufweist. Die Stabilisierungsplatte weist eine im Vergleich zum Kernblech erhöhte Dicke auf, beispielsweise dessen 3 bis 10-fache Dicke oder einige Millimeter. Je nach Wahl des Materials der Stabilisierungsplatte treten dort ebenfalls Wirbelströme auf, welche andererseits aufgrund des geringen Anteils der Stabilisierungsplatte am Schenkelquerschnitt jedoch annähernd vernachlässigbar sind. Es sind jedoch auch nicht-magnetische und elektrisch nicht leitende Materialien denkbar wie beispielsweise Verbundwerkstoffe, welche sich in vorteilhafter Weise durch ein geringes Gewicht auszeichnen, was insbesondere bei mobilen Anwendungen von Vorteil ist.

Bei elektrisch leitfähigen Materialien sind insbesondere Stahl oder Aluminium als Ausgangswerkstoff für die Stabilisierungsplatte zu verwenden, wobei Stahl eine erhöhte Festigkeit und Aluminium ein geringeres Gewicht aufweisen. Um eine möglichst hohe Ausnutzung des zur Verfügung stehenden Schenkelquerschnitts zu erreichen, grenzt die wenigstens eine Stabilisierungsplatte an die äußere Begrenzung des geschichteten Transformatorkerns an. Eine weitere Stabilisierung eines Kernschenkels ist durch Biegung der wenigstens einen Stabilisierungsplatte um die Schenkelachse ermöglicht. Ähnlich wie bei Profilträgern wird hierdurch die effektive Dicke der Stabilisierungsplatte und damit deren Durchbiegefestigkeit erhöht. Auch hier wird durch eine zusätzliche Verklebung der Stabilisierungsplatte mit dem eigentlichen Transformatorkern beziehungsweise Transformatorschenkel eine weiter erhöhte Festigkeit erreicht.

Entsprechend einer weiteren Ausführungsform der Erfindung ist die Stabilisierungsplatte aus einem Material mit Federcharakteristik gefertigt, beispielsweise aus einem Federstahl. Die daraus gefertigte Stabilisierungsplatte ist in unbelastetem Zustand längs der Schenkelachse nach oben gewölbt. Die Federkonstante ist derart gewählt, dass sie bei Anordnung des Kernschenkels auf deren Oberfläche durch das Eigengewicht des Kernschenkels in die Horizontale gedrückt wird. Durch eine derartige Vorspannung der Stabilisierungsplatte wird ein zusätzlicher Stütz- und auch Dämpfungseffekt gegen Stöße erreicht.

Entsprechend einer bevorzugten Ausgestaltungsform des erfindungsgemäßen Unterflur-Transformators nach einem der vorherigen Ansprüche ist wenigstens ein Kernschenkel mit wenigstens einer Lage eines mit einem Harz getränkten Faserrovings umwickelt. Als Faserroving kommt beispielsweise ein bandähnliches Glasfaserroving in Betracht und als Harz ein Epoxidharz. In ausgehärtetem Zustand ist durch das harzgetränkte Glasfaserroving ein Verbundwerkstoff mit einer hohen Festigkeit gebildet, welcher den jeweiligen Kernschenkel idealerweise längs seiner gesamten axialen Erstreckung umschließt und diesem somit eine hohe Festigkeit verleiht. In vorteilhafter Weise reicht eine dünne Schicht von beispielsweise 1 mm Dicke aus, um eine genügend hohe Festigkeit zu erreichen, so dass der magnetisch nutzbare Kernquerschnitt nicht signifikant reduziert wird. Zudem zeichnen sich derartige Verbundwerkstoffe durch ein geringes Gewicht aus.

Gemäß einer weiteren Erfindungsvariante weist die wenigstens eine Haltevorrichtung ein Dämpfungselement auf. Dies ist insbesondere für den Einsatz bei mobilen Anwendungen in beispielsweise Bahnfahrzeugen vorteilhaft. Dort kommt es aufgrund der Fortbewegung des Bahnfahrzeuges immer wieder zu ruck- oder stoßartigen Bewegungen, welche über die Haltevorrichtungen auf den Unterflurtransformator übertragen werden. Durch die Dämpfer wird die Stoßbelastung für den Transformator aber auch für die Haltevorrichtungen reduziert und dieser kann für eine entsprechend geringere mechanische Beanspruchung ausgelegt werden. Als Dämpfer eignen sich beispielsweise Elemente aus einem elastischen Kunststoff oder Gummi. Diese können derart angeordnet werden, dass sie entweder auf Druck oder Zug beansprucht werden. Wenn die Haltevorrichtungen beispielsweise als Gewindestangen ausgeführt sind, an welchen der Transformatorkern mittels einer Klemmvorrichtung hängend befestigt ist, so lässt sich ein Dämpferelement problemlos in eine Unterbrechungsstelle der jeweiligen Gewindestange integrieren, so dass dieses dann zugbeansprucht ist.

Einer weiteren Erfindungsvariante folgend werden vom Transformatorkern längs einer Schenkelachse mehrere axial benachbarte elektrische Wicklungen durchgriffen, wobei zwischen benachbarten Wicklungen wenigstens eine weitere mit dem Transformatorkern zusammenwirkende Haltevorrichtung vorgesehen ist. Durch die axial benachbarte Anordnung von mehreren jeweils hohlzylindrischen Wicklungssegmenten auf demselben Kernschenkel ist bei entsprechender axialer Beabstandung eine mechanische Eingriffsmöglichkeit an den jeweiligen Kernschenkel gegeben. Die axiale Beabstandung ist erfindungsgemäß so zu wählen, dass in dem so entstandenen Spalt von beispielsweise 5cm bis 10cm eine mit dem Transformatorschenkel zusammenwirkende Haltevorrichtung anordenbar ist beziehungsweise angeordnet ist. Somit ist ein weiterer Laststützpunkt für den Transformatorschenkel geschaffen, welcher dann beispielsweise ebenfalls wie auch die Laststützpunkte an den beiden axialen Enden des Kernes von einer darüber befindlichen Tragestruktur getragen wird. Die Biegebeanspruchung für den Transformatorschenkel wird dadurch in vorteilhafter Weise reduziert. Selbstverständlich sind auch mehrere zusätzliche Laststützpunkte je Transformatorschenkel möglich. Bei der Bildung einer elektrischen Wicklung aus mehreren Wicklungssegmenten ist eine geeignete elektrische Ausführungsform zu wählen, beispielsweise eine Reihenschaltung von gleichartigen Oberspannungswicklungssegmenten und eine Parallelschaltung von mehreren gleichartigen Unterspannungssegmenten.

Eine Aufteilung von Wicklungssegmenten kann erfindungsgemäß ohne weiteres auch auf mehreren Kernschenkeln erfolgen, beispielsweise auf 2 oder auch 3, wobei die Kernschenkel beziehungsweise deren Schenkelachsen dann vorzugsweise parallel ausgerichtet sind. Somit ergibt sich eine quaderähnliche Grundform des Unterflur-Transformators, welche dem ebenfalls quaderähnlichen Platzangebot im Unterflurbereich eines Fahrzeuges entspricht, so dass der zur Verfügung stehende Platz in besonders effektiver Weise ausgenutzt ist.

Die genannten Vorteile eines erfindungsgemäßen Unterflur-Transformators erschließen sich auch auf ein Schienenfahrzeug, welches einen Unterflurbereich aufweist, in welchem hängend an einer darüber befindlichen Tragestruktur ein Unterflur-Transformator nach einem der Ansprüche 1 bis 11 angeordnet ist. Selbstverständlich gilt dies auch für nicht schienengebundene Fahrzeuge wie Oberleitungsbusse oder dergleichen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch einen exemplarischen Unterflurtransformator,
- Fig. 2: einen Querschnitt durch einen geschichteten Transformatorschenkel,
- Fig. 3: eine Draufsicht auf einen zweiten exemplarischen Unterflurtransformator,
- Fig. 4: einen Schnitt durch einen ersten exemplarischen Kernbereich mit Haltevorrichtung sowie
- Fig. 5: einen Schnitt durch einen zweiten exemplarischen Kernbereich mit Haltevorrichtung.

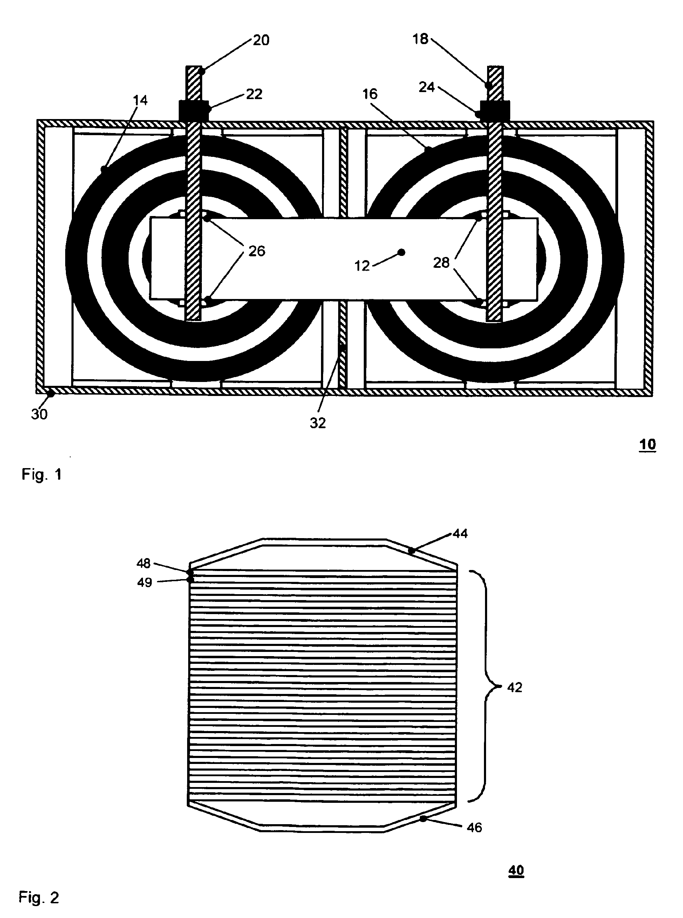

Fig. 1 zeigt einen Schnitt durch einen exemplarischen Unterflurtransformator 10. Dieser umfasst einen waagerecht angeordneten Transformatorkern 12 mit insgesamt zwei Schenkeln, um welche eine erste 14 und eine zweite 16 hohlzylindrische Wicklung angeordnet sind. Die Wicklungen 14, 16 weisen jeweils drei radial durch Kühlkanäle beabstandete ineinander verschachtelte hohlzylindrische Wicklungssegmente auf. Der Transformatorkern 12 ist hängend mittels zweier Haltevorrichtungen 18, 20 an seinem einen axialen Ende gehalten, wobei an seinem anderen axialen Ende ebenfalls zwei entsprechende Haltevorrichtungen vorgesehen sind, welche in dieser Fig. jedoch nicht gezeigt sind. Die Haltevorrichtungen 18, 20 sind als Gewindestangen ausgeführt, welche an ihrem unteren Ende durch eine entsprechende bohrungsähnliche Aussparung durch den geblecht ausgeführten Transformatorkern 12 geführt sind. Eine kraftschlüssige Verbindung der Gewindestangen 18, 20 mit dem Transformatorkern 12 ist mittels zweier Spannvorrichtungen 26, 28 realisiert, welche den Transformatorkern 12 zwischen seiner Ober- und Unterseite kontermutterähnlich einspannen. Der Transformator ist in einem quaderähnlichen Gehäuse 30 angeordnet, welches einerseits dem mechanischen Schutz des Transformators und andererseits auch der Führung von Kühlluft längs der Wicklungen 14, 16 dient. Ein entsprechendes Kühlsystem ist in dieser Fig. jedoch nicht gezeigt. In diesem Beispiel ist eine Trennwand 32 zwischen linker und rechter Transformatorhälfte angeordnet, wobei im nicht gezeigten hinteren Bereich ein Übergang zwischen den so gebildeten Kanälen vorgesehen ist, so dass sich eine U-förmige Führung der Kühlluft durch das Transformatorgehäuse 32 ergibt. Eine Abtragung des Transformatorkerngewichtes oder des Spulengewichtes über das Gehäuse 32 erfolgt nicht.

Fig. 2 zeigt einen Querschnitt 40 durch einen geschichteten Transformatorschenkel 42, welcher seinerseits eine Vielzahl an in Kernschichten 48, 49 angeordneten elektrisch isolierten Blechen aufweist. An der Oberseite des Transformatorschenkels 42 ist eine um die Schenkelachse des Transformatorschenkels 42 gebogene Stabilisierungsplatte 44 aus Aluminium vorgesehen, welche mit dem Transformatorschenkel 42 verklebt ist. Durch die Biegung der Stabilisierungsplatte 44 ist ein Profil gebildet, welches der Stabilisierungsplatte 44 und damit auch dem damit verbundenen Transformatorschenkel 42 eine erhöhte Stabilität gegen Durchbiegen verleiht. Auf der Unterseite ist eine entsprechende Stabilisierungsplatte 46 vorgesehen. Die gewölbte Form der Stabilisierungsplatten 44, 46 passt sich in den hohlzylindrischen Innenraum einer nicht gezeigten den Transformatorschenkel 40 umschließenden Wicklung ein, so dass durch die Stabilisierungsplatten 44, 46 kein relevanter Verlust an aktiver Kernquerschnittsfläche resultiert.

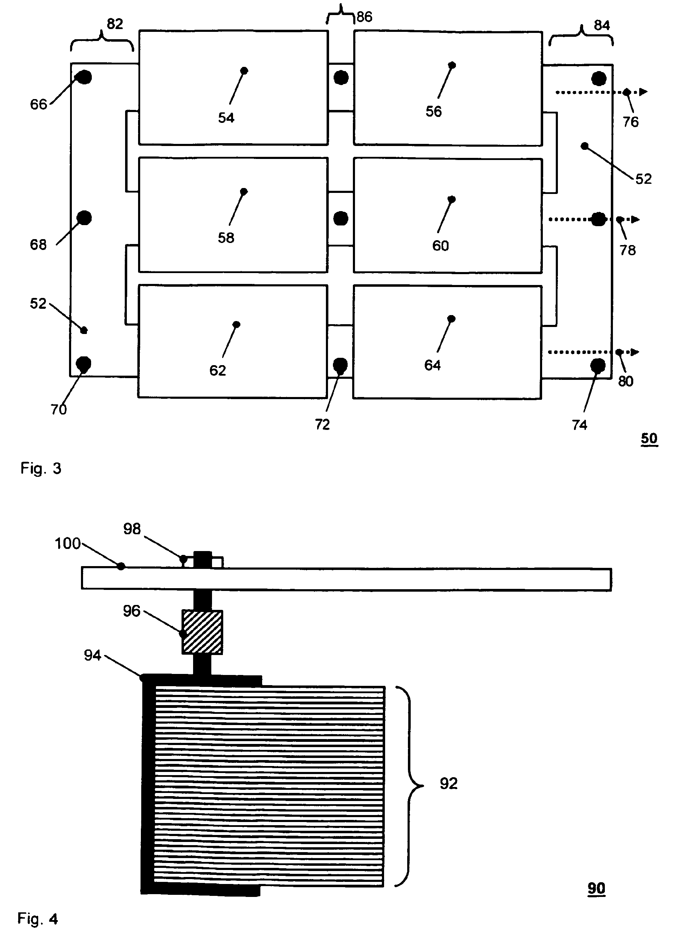

Fig. 3 zeigt eine Draufsicht auf einen liegenden zweiten exemplarischen Unterflur-transformator 50. Dieser weist einen Transformatorkern 52 mit insgesamt drei parallelen längs jeweiliger Schenkelachsen 76, 78, 80 verlaufende Kernschenkel auf. Auf jedem Kernschenkel sind jeweils zwei benachbarte von diesem durchgriffene hohlzylindrische Wicklungen 54, 56, 58, 60, 62, 64 angeordnet, wobei zwischen den jeweiligen Wicklungspaaren ein spaltähnlicher axialer Zwischenbereich 86 gebildet ist, an dem ein mechanischer Zugriff auf den Transformatorkern 52 ermöglicht ist. An den ebenfalls mechanisch zugänglichen axialen Endbereichen 82, 84 des Transformatorkerns sind ebenso wie im axialen Zwischenbereich 86 jeweils drei Haltevorrichtungsteile 66, 68, 70, 72, 74 vorgesehen, an welchen der Transformatorkern 52 hängend zu befestigen ist. Die Haltevorrichtungsteile 66, 68, 70, 72, 74 sind stabähnlich ausgeführt und durch jeweilige im Querschnitt darauf angepasste Bohrungen durch den Transformatorkern geführt und mit diesem mechanisch verbunden, beispielsweise mit einer nicht gezeigten tellerähnlichen Verdickung der stabähnlich ausgeführten Haltevorrichtungsteile 66, 68, 70, 72, 74 in ihrem jeweiligen unteren Bereich. Optional ist auf der Oberseite des Transformatorkerns 52 eine Fixiervorrichtung vorgesehen.

Fig. 4 zeigt einen Schnitt 90 durch einen ersten exemplarischen Kernbereich 92 mit Haltevorrichtung 94. Der Transformatorkern ist in diesem Abschnitt hängend an einer Tragestruktur 100 befestigt. Die Haltevorrichtung 94 weist einen zugbelastbaren Dämpfer 96 auf, welcher beispielsweise aus einem leicht elastischem Kunststoff gefertigt ist. Die Verbindung zwischen der gewindestangenähnlich ausgeführten Haltestruktur 94 und der Tragestruktur erfolgt in diesem Fall durch eine Bohrung, durch welche die Gewindestange geführt ist und einer Haltevorrichtung 98, beispielsweise eine auf der Gewindestange befestigte Mutter. Die Haltevorrichtung 98 ist in ihrem unteren Bereich U-förmig ausgeführt, klemmt die Bleche des gezeigten Kernbereichsquerschnittes 92 ein und bildet so eine kraftschlüssige Verbindung mit dem Transformatorkern.

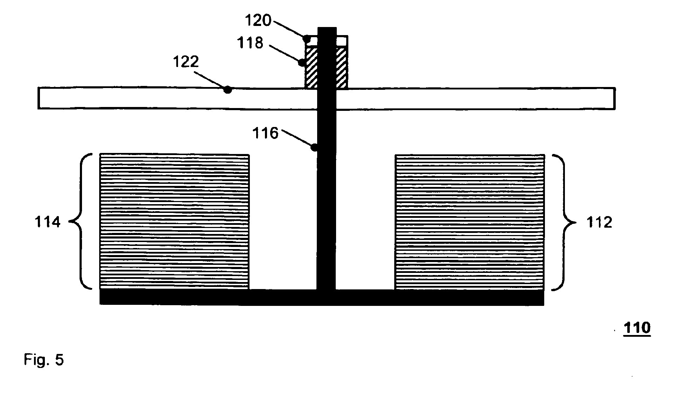

Fig. 5 zeigt einen Schnitt 110 durch einen zweiten exemplarischen Kernbereich 112, 114 mit T-förmig ausgeführter hängenden Haltevorrichtung 116, welche an ihren beiden T-Balken jeweils die Kernschenkel 112, 114 von unten abstützt. Ein derartiges Beispiel für eine Haltevorrichtung 116 ist insbesondere bei axial geteilten Wicklungen günstig, wobei hier eine zusätzliche Abstützung der Kernschenkel im axialen Zwischenbereich zwischen den benachbarten Wicklungen erfolgt. Die T-förmige Haltevorrichtung 116 ist in ihrem oberen Bereich durch eine Bohrung einer über dem Transformatorkern befindlichen Tragestruktur 122, beispielsweise ein Bodenteil eines Schienenfahrzeugs, geführt und dort mittels eines Befestigungsmittels 120 gehalten. Zwischen dem Befestigungsmittel 120 und der Oberseite der Tragestruktur 122 ist ein druckbelastbarer Dämpfer 118 vorgesehen, welcher ein Übertragen von Stößen der Tragestruktur 122 auf den Transformatorkern in vorteilhafter Weise dämpft, so dass eine mechanische Entlastung des Transformators und seiner Haltestruktur 116 erfolgt, insbesondere auch bei unvermeidbaren Vibrationen des Schienenfahrzeuges. Ebenso ist auch ein Übertragen beispielsweise von betriebsbedingten 50Hz Schwingungen des Transformators auf das Schienenfahrzeug gedämpft.

### Bezugseichenliste

- 10: Schnitt durch einen exemplarischen Unterflurtransformator
- 12: erster Transformatorkern
- 14: erste Wicklung des ersten Transformatorkerns
- 16: zweite Wicklung des ersten Transformatorkerns
- 18: erste Haltevorrichtung des ersten Transformatorkerns
- 20: zweite Haltevorrichtung des ersten Transformatorkerns
- 22: Dämpfer von erster Haltevorrichtung
- 24: Dämpfer von zweiter Haltevorrichtung
- 26: Spannvorrichtung von erster Haltevorrichtung
- 28: Spannvorrichtung von zweiter Haltevorrichtung
- 30: Transformatorgehäuse
- 32: Trennwand
- 40: Querschnitt durch einen geschichteten Transformatorschenkel
- 42: geschichteter Transformatorschenkel
- 44: obere Stabilisierungsplatte
- 46: untere Stabilisierungsplatte
- 48: erste Kernschicht
- 49: zweite Kernschicht
- 50: Draufsicht auf einen zweiten exemplarischen Unterflurtransformator
- 52: zweiter Transformatorkern
- 54: erste Wicklung von zweitem Transformatorkern
- 56: zweite Wicklung von zweitem Transformatorkern
- 58: dritte Wicklung von zweitem Transformatorkern
- 60: vierte Wicklung von zweitem Transformatorkern
- 62: fünfte Wicklung von zweitem Transformatorkern
- 64: sechste Wicklung von zweitem Transformatorkern
- 66: erster Teil von erster Haltevorrichtung
- 68: zweiter Teil von erster Haltevorrichtung
- 70: dritter Teil von erster Haltevorrichtung
- 72: erster Teil von zweiter Haltevorrichtung
- 74: erster Teil von dritter Haltevorrichtung
- 76: erste Schenkelachse
- 78: zweite Schenkelachse
- 80: dritte Schenkelachse
- 82: erster axialer Endbereich
- 84: zweiter axialer Endbereich
- 86: axialer Zwischenbereich
- 90: Schnitt durch ersten exemplarischen Kernbereich mit Haltevorrichtung
- 92: Transformatorkernjoch
- 94: erste Haltevorrichtung
- 96: Dämpfer von erster Haltevorrichtung
- 98: erste Befestigungsmittel
- 100: erste Tragestruktur
- 110: Schnitt durch zweiten exemplarischen Kernbereich mit Haltevorrichtung
- 112: erster Transformatorkernschenkel
- 114: zweiter Transformatorkernschenkel
- 116: zweite Haltevorrichtung
- 118: Dämpfer von zweiter Haltevorrichtung
- 120: zweite Befestigungsmittel
- 122: zweite Tragestruktur

## Patentansprüche

1. Unterflur-Transformator (10, 50), umfassend einen geschichteten Transformatorkern (12, 42, 52, 92, 112, 114) und wenigstens eine von diesem längs einer Schenkelachse (76, 78, 80) durchgriffene elektrische Wicklung (14, 16, 54, 56, 58, 60, 62, 64), **dadurch gekennzeichnet,**
**dass** an den beiden axialen Endbereichen (82, 84) des Transformatorkerns (12, 42, 52, 92, 112, 114) jeweils eine mechanisch mit diesem zusammenwirkende Haltevorrichtung (18, 20, 66, 68, 70, 72, 74, 94, 116) vorgesehen ist, welche für eine derartige Zugkraftbeanspruchung so ausgelegt ist, dass der Unterflur-Transformator (10, 50) bei annähernd waagerecht ausgerichteter Schenkelachse (76, 78, 80) hängend von diesen Haltevorrichtungen (18, 20, 66, 68, 70, 72, 74, 94, 116) getragen werden kann.

2. Unterflur-Transformator nach Anspruch 1, **dadurch gekennzeichnet, dass** benachbarte Schichten (48, 49) des geschichteten Transformatorkerns (12, 42, 52, 92, 112, 114) längs wenigstens einer Schenkelachse (76, 78, 80) miteinander verklebt sind.

3. Unterflur-Transformator nach Anspruch 1 oder 2, **dadurch gekennzeichnet, dass** der geschichtete Transformatorkern (12, 42, 52, 92, 112, 114) längs wenigstens einer Schenkelachse (76, 78, 80) wenigstens eine Stabilisierungsplatte (44, 46) aufweist.

4. Unterflur-Transformator nach Anspruch 3, **dadurch gekennzeichnet, dass** die wenigstens eine Stabilisierungsplatte (44, 46) eine Stahl- oder Aluminiumplatte ist.

5. Unterflur-Transformator nach Anspruch 3 oder 4, **dadurch gekennzeichnet, dass** die wenigstens eine Stabilisierungsplatte (44, 46) an die äußere Begrenzung des geschichteten Transformatorkerns (12, 42, 52, 92, 112, 114) angrenzt.

6. Unterflur-Transformator nach Anspruch 5, **dadurch gekennzeichnet, dass** die wenigstens eine Stabilisierungsplatte (44, 46) um die Schenkelachse (76, 78, 80) gebogen ist.

7. Unterflur-Transformator nach Anspruch 5, **dadurch gekennzeichnet, dass** die wenigstens eine Stabilisierungsplatte (44, 46) längs der Schenkelachse (76, 78, 80) gebogen ist.

8. Unterflur-Transformator nach einem der Ansprüche 3 bis 7, **dadurch gekennzeichnet, dass** die Stabilisierungsplatte (44, 46) zumindest in Teilbereichen mit dem geschichteten Transformatorkern (12, 42, 52, 92, 112, 114) verklebt ist.

9. Unterflur-Transformator nach einem der vorherigen Ansprüche, **dadurch gekennzeichnet, dass** wenigstens ein Schenkel mit wenigstens einer Lage mit einem Harz getränkten Faserroving umwickelt ist.

10. Unterflur-Transformator nach einem der vorherigen Ansprüche, **dadurch gekennzeichnet, dass** wenigstens eine Haltevorrichtung (18, 20, 66, 68, 70, 72, 74, 94, 116) ein Dämpfungselement (22, 24, 96, 118) aufweist.

11. Unterflur-Transformator nach einem der vorherigen Ansprüche, **dadurch gekennzeichnet, dass** vom Transformatorkern (12, 42, 52, 92, 112, 114) längs einer Schenkelachse (76, 78, 80) mehrere axial benachbarte elektrische Wicklungen (54, 56; 58, 60; 62, 64) durchgriffen werden, wobei zwischen benachbarten Wicklungen wenigstens eine weitere mit dem Transformatorkern (12, 42, 52, 92, 112, 114) zusammenwirkende Haltevorrichtung (72, 116) vorgesehen ist.

12. Unterflur-Transformator nach einem der vorherigen Ansprüche, **dadurch gekennzeichnet, dass** mehrere parallele Schenkelachsen (76, 78, 80) vorgesehen sind.

13. Schienenfahrzeug, **dadurch gekennzeichnet, dass** dieses einen Unterflurbereich aufweist, in welchem hängend an einer darüber befindlichen Tragestruktur (100, 112) ein Unterflur-Transformator (10, 50) nach einem der Ansprüche 1 bis 12 angeordnet ist.

## Claims

1. Underfloor transformer (10, 50) comprising a layered transformer core (12, 42, 52, 92, 112, 114) and at least one electrical winding (14, 16, 54, 56, 58, 60, 62, 64) through which said transformer core (12, 42, 52, 92, 112, 114) extends along a limb axis (76, 78, 80), **characterized**
**in that** in each of the two axial end regions (82, 84) of the transformer core (12, 42, 52, 92, 112, 114), a securing device (18, 20, 66, 68, 70, 72, 74, 94, 116) which interacts with said transformer core (12, 42, 52, 92, 112, 114) mechanically is provided, which securing device (18, 20, 66, 68, 70, 72, 74, 94, 116) is configured for such tensile force stressing such that the underfloor transformer (10, 50) can be carried suspended from said securing devices (18, 20, 66, 68, 70, 72, 74, 94, 116) given an approximately horizontally oriented limb axis (76, 78, 80).

2. Underfloor transformer according to Claim 1, **characterized in that** adjacent layers (48, 49) of the layered transformer core (12, 42, 52, 92, 112, 114) are bonded to one another along at least one limb axis (76, 78, 80).

3. Underfloor transformer according to Claim 1 or 2, **characterized in that** the layered transformer core (12, 42, 52, 92, 112, 114) has at least one stabilizer plate (44, 46) along at least one limb axis (76, 78, 80).

4. Underfloor transformer according to Claim 3, **characterized in that** the at least one stabilizer plate (44, 46) is a steel plate or aluminium plate.

5. Underfloor transformer according to Claim 3 or 4, **characterized in that** the at least one stabilizer plate (44, 46) adjoins the outer boundary of the layered transformer core (12, 42, 52, 92, 112, 114).

6. Underfloor transformer according to Claim 5, **characterized in that** the at least one stabilizer plate (44, 46) is bent about the limb axis (76, 78, 80).

7. Underfloor transformer according to Claim 5, **characterized in that** the at least one stabilizer plate (44, 46) is bent along the limb axis (76, 78, 80).

8. Underfloor transformer according to one of Claims 3 to 7, **characterized in that** the stabilizer plate (44, 46) is bonded, at least in certain regions, to the layered transformer core (12, 42, 52, 92, 112, 114).

9. Underfloor transformer according to one of the preceding claims, **characterized in that** at least one layer with a resin-impregnated fibre roving is wound around at least one limb.

10. Underfloor transformer according to one of the preceding claims, **characterized in that** at least one securing device (18, 20, 66, 68, 70, 72, 74, 94, 116) has a damping element (22, 24, 96, 118).

11. Underfloor transformer according to one of the preceding claims, **characterized in that** the transformer core (12, 42, 52, 92, 112, 114) extends through a plurality of axially adjacent electrical windings (54, 56; 58, 60; 62, 64) along a limb axis (76, 78, 80), wherein at least one further securing device (72, 116) which interacts with the transformer core (12, 42, 52, 92, 112, 114) is provided between adjacent windings.

12. Underfloor transformer according to one of the preceding claims, **characterized in that** a plurality of parallel limb axes (76, 78, 80) are provided.

13. Rail vehicle, **characterized in that** said rail vehicle has an underfloor region in which an underfloor transformer (10, 50) is arranged suspended from a carrying structure (100, 112) located above it, according to one of Claims 1 to 12.

## Revendications

1. Transformateur sous châssis (10, 50) comprenant un noyau de transformateur feuilleté (12, 42, 52, 92, 112, 114) et au moins un enroulement électrique (14, 16, 54, 56, 58, 60, 62, 64) traversé par celui-ci le long d'un axe de branche (76, 78, 80), **caractérisé en ce**
**qu'**aux deux régions d'extrémité axiales (82, 84) du noyau de transformateur (12, 42, 52, 92, 112, 114) est à chaque fois prévu un dispositif de retenue (18, 20, 66, 68, 70, 72, 74, 94, 116) coopérant mécaniquement avec celui-ci, lequel est conçu pour être sollicité par une force de traction telle que le transformateur sous châssis (10, 50), lorsque l'axe de branche (76, 78, 80) est orienté approximativement horizontalement, puisse être supporté en étant suspendu à ces dispositifs de retenue (18, 20, 66, 68, 70, 72, 74, 94, 116).

2. Transformateur sous châssis selon la revendication 1, **caractérisé en ce que** des couches adjacentes (48, 49) du noyau de transformateur feuilleté (12, 42, 52, 92, 112, 114) sont collées les unes aux autres le long d'au moins un axe de branche (76, 78, 80).

3. Transformateur sous châssis selon la revendication 1 ou 2, **caractérisé en ce que** le noyau de transformateur feuilleté (12, 42, 52, 92, 112, 114) présente au moins une plaque de stabilisation (44, 46) le long d'au moins un axe de branche (76, 78, 80).

4. Transformateur sous châssis selon la revendication 3, **caractérisé en ce que** l'au moins une plaque de stabilisation (44, 46) est une plaque en acier ou en aluminium.

5. Transformateur sous châssis selon la revendication 3 ou 4, **caractérisé en ce que** l'au moins une plaque de stabilisation (44, 46) est adjacente à la limite extérieure du noyau de transformateur feuilleté (12, 42, 52, 92, 112, 114).

6. Transformateur sous châssis selon la revendication 5, **caractérisé en ce que** l'au moins une plaque de stabilisation (44, 46) est cintrée autour de l'axe de branche (76, 78, 80).

7. Transformateur sous châssis selon la revendication 5, **caractérisé en ce que** l'au moins une plaque de stabilisation (44, 46) est cintrée le long de l'axe de branche (76, 78, 80).

8. Transformateur sous châssis selon l'une quelconque des revendications 3 à 7, **caractérisé en ce que** la plaque de stabilisation (44, 46) est collée au noyau de transformateur feuilleté (12, 42, 52, 92, 112, 114) au moins dans des régions partielles.

9. Transformateur sous châssis selon l'une quelconque des revendications précédentes, **caractérisé en ce qu'**au moins une branche est enroulée sur au moins une couche avec une mèche de fibres imbibée de résine.

10. Transformateur sous châssis selon l'une quelconque des revendications précédentes, **caractérisé en ce qu'**au moins un dispositif de retenue (18, 20, 66, 68, 70, 72, 74, 94, 116) présente un élément d'amortissement (22, 24, 96, 118).

11. Transformateur sous châssis selon l'une quelconque des revendications précédentes, **caractérisé en ce que** plusieurs enroulements électriques adjacents axialement (54, 56, 58, 60, 62, 64) sont traversés par le noyau de transformateur (12, 42, 52, 92, 112, 114) le long d'un axe de branche (76, 78, 80), au moins un dispositif de retenue supplémentaire (72, 116) coopérant avec le noyau de transformateur (12, 42, 52, 92, 112, 114) étant prévu entre des enroulements adjacents.

12. Transformateur sous châssis selon l'une quelconque des revendications précédentes, **caractérisé en ce que** plusieurs axes de branche parallèles (76, 78, 80) sont prévus.

13. Véhicule ferroviaire, **caractérisé en ce que** celui-ci présente une région sous châssis dans laquelle est disposé un transformateur sous châssis (10, 50) selon l'une quelconque des revendications 1 à 12, suspendu à une structure portante (100, 112) se trouvant au-dessus de lui.
